(19) Europäisches Patentamt / European Patent Office / Office européen des brevets

(11) **EP 3 320 625 B1**

(12) **EUROPEAN PATENT SPECIFICATION**

(45) Date of publication and mention
of the grant of the patent:
**21.04.2021 Bulletin 2021/16**

(21) Application number: **15751026.4**

(22) Date of filing: **20.08.2015**

(51) Int Cl.:
***H04B 7/0452*** *(2017.01)*

(86) International application number:
**PCT/EP2015/069144**

(87) International publication number:
**WO 2017/028924 (23.02.2017 Gazette 2017/08)**

(54) **CHANNEL STATE INFORMATION ACQUISITION IN A MULTI-USER MULTIPLE-INPUT MULTIPLE-OUTPUT TRANSMISSION SCHEME**

KANALZUSTANDSINFORMATIONSERFASSUNG IN EINEM MEHRBENUTZER-MIMO-ÜBERTRAGUNGSSCHEMA

ACQUISITION D'INFORMATIONS D'ÉTAT DE CANAL DANS UN SCHÉMA D'ÉMISSION MULTIUTILISATEUR À ENTRÉE MULTIPLE SORTIE MULTIPLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**16.05.2018 Bulletin 2018/20**

(73) Proprietor: **Huawei Technologies Co., Ltd.
Longgang District
Shenzhen, Guangdong 518129 (CN)**

(72) Inventors:
• **DESTOUNIS, Apostolos**
  **80992 Munich (DE)**
• **MASO,Marco**
  **80992 Munich (DE)**

(74) Representative: **Gill Jennings & Every LLP
The Broadgate Tower
20 Primrose Street
London EC2A 2ES (GB)**

(56) References cited:
**US-A1- 2014 092 819**

• **ADHIKARY ANSUMAN ET AL: "Joint Spatial Division and Multiplexing-The Large-Scale Array Re", IEEE TRANSACTIONS ON INFORMATION THEORY, IEEE PRESS, USA, vol. 59, no. 10, 1 October 2013 (2013-10-01), pages 6441-6463, XP011526827, ISSN: 0018-9448, DOI: 10.1109/TIT.2013.2269476 [retrieved on 2013-09-11]**
• **NAM JUNYOUNG ET AL: "Joint Spatial Division and Multiplexing: Opportunistic Beamforming, User Grouping and Simplified Downlink Scheduling", IEEE JOURNAL OF SELECTED TOPICS IN SIGNAL PROCESSING, IEEE, US, vol. 8, no. 5, 1 October 2014 (2014-10-01) , pages 876-890, XP011558895, ISSN: 1932-4553, DOI: 10.1109/JSTSP.2014.2313808 [retrieved on 2014-09-11]**

**Description**

FIELD

The present invention relates to a multi-user multiple-input multiple-output (MU-MIMO) transmission scheme. In particular, the present invention relates to channel state information (CSI) acquisition in a MU-MIMO transmission scheme.

BACKGROUND

Transmission schemes making use of transmitters having large antenna arrays are a promising technique for increasing the transmission bit rate of cellular systems. However, the envisaged performance gains may only be achieved if each transmitter involved has an accurate notion of the state of each channel, i.e., the transmission link to a receiver. As it is known in the art, the accurate notion of the state of a channel may be achieved by acquiring CSI which describes how a signal propagates from the transmitter to the receivers and which represents the combined effect of, for example, scattering, fading, and power decay along the signal path of the transmission link. One technique to acquire the CSI is to send a pilot or training sequence in the downlink (i.e., from the transmitter to the receivers) so that each receiver can estimate its channel state and then feed this estimation back to the transmitter in the uplink. This technique has the advantage of not requiring a precise calibration of the receivers as opposed to techniques using uplink pilots and exploiting reciprocity.

However, a drawback of this technique may be that the length of the downlink pilot or training sequence and the size of the data to be fed back per receiver may grow linearly with the size of the antenna array. Thus, the time needed to perform the feedback procedure may grow large for big arrays. Since the channel states stay (approximately) the same for a fixed amount of time and they need to be estimated again when they change, time spent for CSI acquisition may considerably reduce the time available for transmitting payload to the receivers. Thus, the gains from having a large array may not be fully exploited.

To overcome this drawback, it is known to adopt a two-tier precoding strategy based on (spatially) grouping the receivers and computing an outer precoder for each group based on second order channel statistics, i.e., correlations of the channel states, for inter-group interference cancellation and an inner precoder based on CSI for intra-group multiplexing.

Adhikary et. al in IEEE transaction on information theory, Vol. 59, No. 10 discuss a joint spatial division and multiplexing approach to multiuser MIMO downlink.

US 2014/00928 19 A1 describes a method of scheduling transmission for multi-user multiple-input, multiple-output (MU-MIMO) data in a wireless communication system.

SUMMARY

Although the MU-MIMO grouping of receivers may reduce CSI acquisition efforts, it may, however, also reduce the freedom of the transmitter to attend to individual Quality of Service (QoS) demands, traffic conditions of the receivers and fairness considerations, as the available radio resources and degrees of freedom for each group has to be shared between members of the group so that, for example, members of a large group may have to cope with reduced QoS compared to members of a small group.

To overcome this drawback, additional information related to measures of relevant aspects of the network/service such as (but not limited to) QoS demands, traffic conditions of the receivers and fairness considerations which together indicate a transmission priority of each receiver may be taken into account when re-grouping the receivers. Taking said additional information into account may allow for improved adaptability and may be particularly beneficial in static scenarios (with respect to signal path correlations) in which variable bit rate requests occur or in dynamic scenarios in which constant/variable bit rate requests occur as will be explained in greater detail in the following.

Various aspects of the present disclosure have been defined in the independent claims. Further technical features of each of these aspects have been defined in the respective dependent claims.

As used throughout the description and the claims, the process of "dynamically grouping" is intended to be understood broadly and particularly refers to (periodic) monitoring of criteria based on which receivers may be assigned to each other to form a group. Once the criteria change significantly, the assignment may be changed or updated. Moreover, the significance of a change may be determined by applying a pre-defined measure or rule to the criteria. Thus, the mapper may (periodically) monitor, for example, once during a pre-defined number of transmission slots or according to a pre-defined rule which adaptively calculates the time interval, whether the correlations between the channels from the antennas to the receivers or the transmission priority of each receiver change significantly. If they do, the mapper may evaluate the situation dynamically and form suitable MU-MIMO groups, i.e., the mapper may form new groups which are different from recently formed groups to adapt the grouping (at least partially) to said transmission priorities.

Thus, even in case that the correlations between the signal paths from the antennas to the receivers do not change significantly, the assignment of receivers to each other to form MU-MIMO groups may change as a result of a significant change in the transmission priorities. For example, if a traffic request of a receiver increases significantly, e.g., due to launching a traffic-intense application, transmission priority of said receiver may increase while a transmission priority of another receiver may decrease, e.g., due to stopping a traffic-intense application.

Furthermore, it is noted that although the description and the claims refer to a mapper and a selector and various other entities of the transmitter, it is to be understood that each of these entities does not necessarily require to be represented by a dedicated hardware component. Rather, entities may be implemented by one or more hardware components and may even be (partially) implemented by software as it is apparent to someone of skill in the art. Accordingly, the entities referred to when discussing or describing the transmitter or processes performed by the transmitter are not intended to limit the disclosure to particular hardware components. Rather, the references to entities which perform different functions merely serves the purpose of clarification.

Thus, if the antenna array comprises M antenna elements, an outer precoder of dimension M times S may be computed for each MU-MIMO group comprising receivers with similar channel statistics. For example, S may be linked to the number of dominant directions of the signal space defined by the second order statistics of the channel (e.g., the channel correlations). This way, each receiver may effectively see a vector of S coefficients as its equivalent channel which reduces the dimensionality of the CSI feedback.

Thus, the inner precoder may adapt to the fast fading (or more precisely to the channel state projected on the signal space generated by the outer precoder).

As used throughout the description and the claims, the process of "dynamically re-calculating" transmission priorities is intended to be understood broadly and particularly refers to (periodic) monitoring of criteria based on which transmission priorities are calculated. Moreover, once the criteria change significantly, the transmission priorities may be changed or updated, wherein the significance of a change may be determined by applying a pre-defined measure or rule to the criteria. Thus, the transmitter may (periodically) monitor, for example, once within a pre-defined number of transmission slots or according to a pre-defined rule which adaptively calculates the time interval, whether the criteria based on which the transmission priorities are calculated change significantly. If they do, the transmitter may re-calculate the priorities. Accordingly, the transmission priorities may be adapted to individual requests or requirements of the receivers.

Hence, the criteria may involve one or any combination of QoS requirements, traffic conditions and fairness considerations relating to the receivers. Thus, a receiver whose QoS requirements increase during operation, e.g., due to starting an application, may be awarded a higher transmission priority.

For example, if a first receiver has had a lower traffic amount than a second receiver during the common time-interval but currently requires the same or even a higher bit rate, the transmission priority of the first receiver may be raised above the transmission priority of the second receiver or the transmission priority of the second receiver may be lowered below the transmission priority of the first receiver to impose fairness on the data traffic of the receivers. Hence, the number of MU-MIMO groups may not be static, even in case that the number of receivers (substantially) remains the same. In particular, MU-MIMO groups may be merged or divided.

At this stage, it should be noted that the above described approach can provide a high level of flexibility both in terms of implementation and in terms of adaptiveness to a cellular communication system in which it is practiced. In other words, it overcomes disadvantages of the prior art by adopting a dynamic approach to the decision process in contrast to static prior art approaches. Remarkably, the more the environment does not offer the critical conditions for the prior art approaches to work, the more the proposed approach provides significant advantages.

BRIEF DESCRIPTION OF THE DRAWINGS

Several examples of the present invention will now be described by way of an exemplary system model with reference to the accompanying drawings in which:

Fig. 1 is a schematic illustration of a cellular communication network comprising an exemplary transmitter and a plurality of receivers;

Fig. 2 is a schematic illustration of a Frequency Division Duplex (FDD) mode which the cellular communication network may deploy;

Fig. 3 is a schematic block diagram outlining a signal flow in the exemplary transmitter;

Fig. 4 is a schematic flow diagram showing operations performed by the transmitter;

Fig. 5 is a schematic illustration of groupings derived from geographical and adaptive clustering;

Fig. 6 is a schematic flow diagram showing operations performed by the transmitter;

Fig. 7 is a schematic illustration of a topology of the plurality of receivers around the transmitter;

Fig. 8 is a schematic illustration of cumulative distributions of the average service rates of the plurality of receivers of Fig. 7; and

Fig. 9 is a schematic flow diagram of a process performed by the transmitter.

DETAILED DESCRIPTION

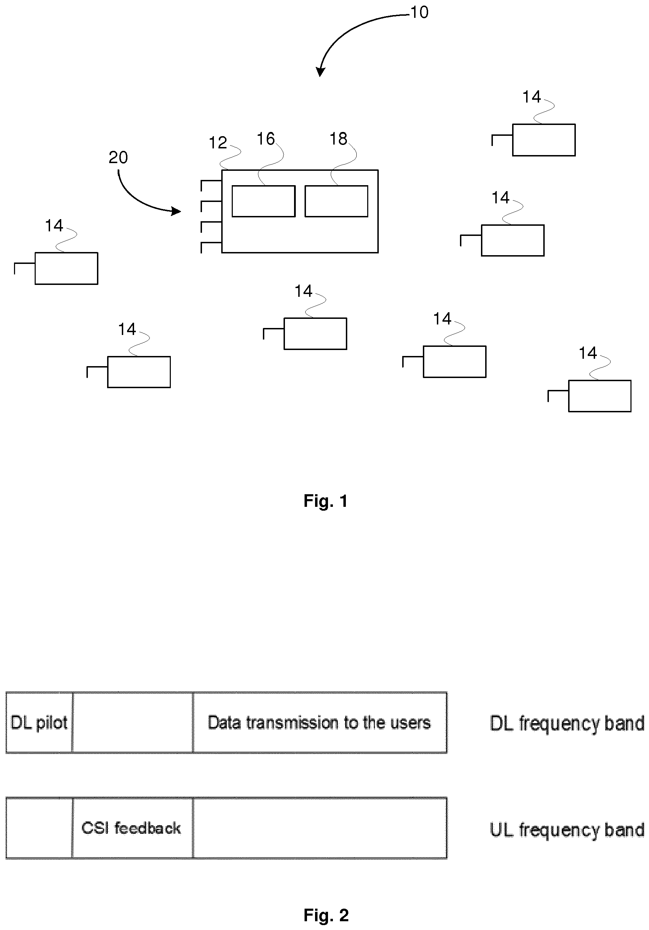

The cellular communication network 10 of Fig. 1 comprises a transmitter 12 and K receivers 14 distributed around the transmitter 12. The transmitter 12 comprises a mapper 16, a selector 18, and an antenna array 20 comprising M antennas 20 for serving the K receivers 14. More particularly, the transmitter 12 may be a base station serving K mobile devices. The cellular communication network 10 operates in time slots whose duration is smaller than the coherence time of the channels between the transmitter 12 and the K receivers 14. I.e., the channels do not (substantially) change for at least the duration of one slot. In the following, the process is described with reference to channels which are frequency flat for sake of simplicity. However, the disclosure is not limited in this regard, as the described process can be applied to each frequency resource block of an OFDMA-based system.

The transmitter 12 is adapted to acquire channel state information, CSI, from the K receivers 14, and is configured to operate the radio antenna array 20 to establish signal paths between antennas of the antenna array 20 and the K receivers 14. The mapper is configured to dynamically group, for a given time interval, the K receivers 14 to MU-MIMO groups, wherein the grouping is based on information indicating correlations between signal paths from the antennas to the receivers 14 and a transmission priority of each receiver 14. The selector 18 is configured to select, for the given time interval, receivers 14 from which CSI is to be received, and to identify one or more of the MU-MIMO groups based on the selected receivers 14.

As an example of dynamical grouping, the mapper may (periodically) monitor, once during a pre-defined number of transmission slots or according to a pre-defined rule which adaptively calculates the time interval, whether the correlations between the channels from the antennas to the receivers or the transmission priority of each receiver change significantly. The pre-defined rule can be defined according to the system configuration and/or characteristics. As an example, the pre-defined rule may include monitoring at least one of: i) a change in the user priorities; ii) the entry of a new user into the cell or the departure of an existing user from the cell; iii) a significant movement of a user within the cell, wherein the term significant is meant here to indicate a movement, which would change the status of the channel of the user so as to affect the transmission quality. In addition or alternatively, the predefined rule may be chosen randomly or v) according to the service received already (e.g. if some users have received much more service than the others). The skilled person will understand that the predefined rule may also be a combination of the above examples.

If the correlations between the channels from the antennas to the receivers or the transmission priority of each receiver or both of them change significantly, the mapper may evaluate the situation dynamically and form suitable MU-MIMO groups, i.e., the mapper may form new groups which are different from recently formed groups to adapt the grouping (at least partially) to said transmission priorities. An example of suitable group maybe, for instance, a group in which have similar channel statistics. In addition or alternatively, user's priorities may also be taken into account.

The channel between a receiver 14 "k" and the transmitter 12 during slot t is assumed to be describable by

$$\vec{h}_k(t) = R_k^{1/2} \vec{\theta}_k(t),$$ where $\vec{\theta}_k$ is a complex random column vector of dimension M and $R_k$ is an M by M positive definite Hermitian matrix, i.e., the covariance matrix for receiver 14 "k" that models the correlations among the paths from different antennas of the antenna array 20 of the transmitter 12 to receiver 14 "k". Since second order channel statistics change at a much slower pace than the channels themselves, i.e., the covariance matrix does not need very frequent updates, it is assumed that the covariance matrix is known perfectly at the transmitter 12. However, this assumption is made in order to simplify the discussion below and it will be clear to the skilled person that the present invention is not limited thereto and can also be applied to systems where the covariance matrix is not perfectly known.

To model different QoS demands of the receivers 14 from which transmission priorities can be drawn, it may be resorted to a set of positive real coefficients. In this context, a coefficient $x_k(t)$ may be associated to each receiver 14 "k" at each slot t, which reflects their demand in terms of service, traffic conditions, priority, fairness considerations and their relation to the service receiver "k" has received up to time slot t. For example, a non-exhaustive list of possible choices for this coefficient can be (i) the amount of data from a core network waiting in the transmitter 12 to be transmitted to the receiver 14 "k", (ii) the delay experienced so far by the head of line packet of receiver 14 "k", (iii) a function of the average rate receiver 14 "k" has received up to time t, specified by a utility function reflecting fairness demands or application characteristics (e.g., the reciprocal of the average rate for receiver 14 "k" so far corresponds to the proportional fair objective). The coefficient may also be any combination of (functions of) the aforementioned quantities or any other quantities reflecting the priority of the receiver 14 "k".

In addition or alternatively, the transmitter 12 may be further configured to re-calculate transmission priorities dynamically when in operation. The transmission priority can be dynamically re-calculated on basis of at least one of quality-of-service, QoS, requirements, traffic conditions and fairness considerations relating to the receivers 14. The fairness considerations may include a comparison of a traffic amount of each receiver 14 during a common time-interval. Common time-interval in this context means that the time interval during which the amount of traffic received at each receiver is analyzed is the same. The common time-interval may be, for instance, an interval of time over which the transmitter measures the received traffic and service given at each mobile.

At the beginning of each time slot, the information provided by the covariance matrices and the coefficients for this slot for all receivers 14 is processed by the mapper 16. The mapper 16 computes both the relevant metrics upon which the subsequent control decisions are taken and the receiver grouping rule for the transmitter 12. After these operations, the selector 18 performs an adaptive selection of the receivers 14 to determine the receivers 18 from which CSI is to be requested based on the output of the mapper 16. This results both in a receiver selection and in an intrinsic group selection (including the MU-MIMO groups to which the selected receivers 14 belong). After the selection, the transmitter 12 starts designing a linear precoder that may be used to serve the selected receivers 14.

To achieve this, a two-step structure of the precoder may be adopted. Accordingly, first an M by S (where S is a parameter related to how many streams are multiplexed per selected MU-MIMO group) outer precoding matrix (or outer precoder) may be designed for each of the selected groups, denoted by $V_{g(k)}(t)$ henceforth, with $\sigma(k)$ indicating the MU-MIMO group to which receiver 14 "k" belongs. Subsequently, a set of pilot or training sequences may be precoded using these matrices and transmitted to the selected receivers 14. At this stage, receiver 14 "k" estimates its equivalent channel and feeds it back as CSI to the transmitter 12. After the reception of this uplink signaling, the transmitter 12 may perform two operations: (i) the information about the statistics of the channels may be updated with the newly received CSI for the selected receivers 14, and (ii) the inner precoding based on the equivalent channel feedback vector, used to serve receiver 14 "k", i.e., $\vec{u}_k(t)$, may be chosen/computed. In particular, $\vec{u}_k(t)$ may be derived according to any linear precoding scheme suitable for MU-MIMO communication, for example, as in the article "Shifting the MIMO Paradigm" authored by Gesbert, D.; Kountouris, M.; Heath, R.W.; Chan-Byoung Chae; Salzer, T. and published in the IEEE Signal Processing Magazine, vol.24, no.5, pp.36,46, in Sept. 2007. Finally, the signal for receiver 14 "k" may then be precoded by means of the two-step precoder $\vec{w}_k(t) = V_{g(k)}(t)\vec{u}_k(t)$.

In the particular example shown in Fig. 2, the cellular communication network 10 operates in FDD mode. Therein, the spectrum is divided in two, usually symmetric, frequency bands, one devoted to downlink (DL) and one to the Uplink (UL) transmissions. As can be seen from Fig. 2, the UL/DL communications in FDD may be divided in three sequential phases:

i. Transmission of the pilot/training sequences by the transmitter 12 to the receivers 14 in the DL frequency band.
ii. CSI estimation and feedback by the receivers 14 in the UL frequency band.
iii. Data transmission from the transmitter 12 to the receivers 14 in the DL frequency band.

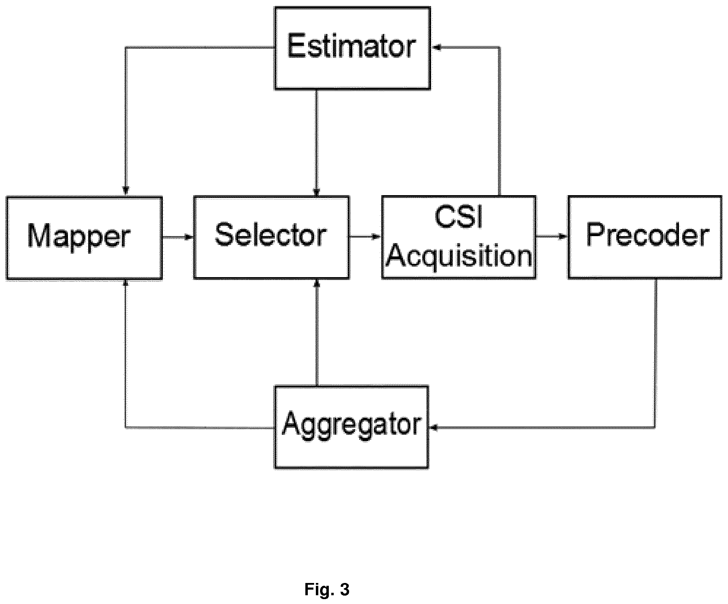

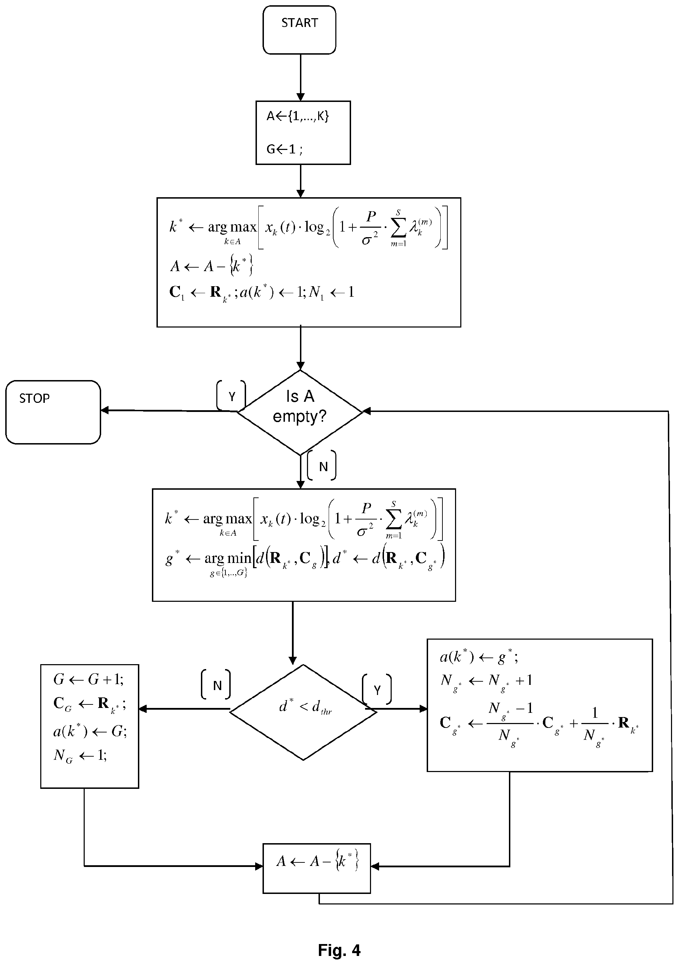

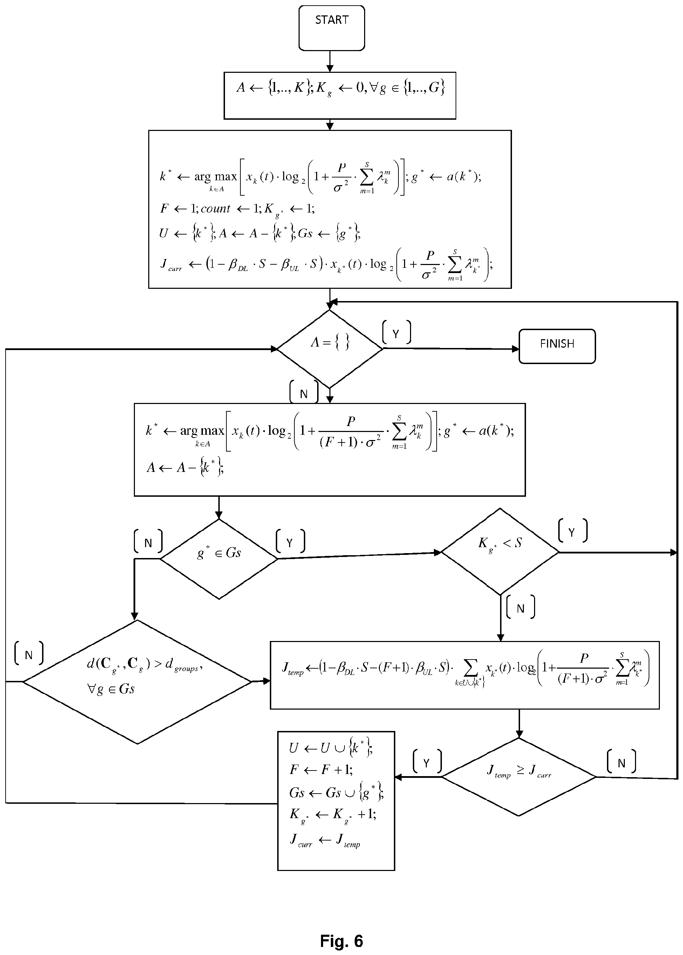

A block diagram outlining the operations performed by the transmitter 12 is shown in Fig. 3 and will be explained in greater detail with reference to Fig. 4-6 in the following. Again, it is noted that the multi-element representation is favored for the sake of simplicity, but this does not imply that the disclosure cannot be implemented by means of a single-element approach.

**Mapper**

The mapper 16 implements the algorithm shown in Fig. 4 which receives the quantities $\{x_1(t),...,x_K(t),R_1,...,R_K\}$ as input and, based on them, may provide the following dynamic outputs:

i. The number of MU-MIMO groups, G, to be used to cluster the receivers 14. Again, it should be noted that the number of MU-MIMO groups is neither deterministic nor pre-determined. Rather, the number is a dynamic parameter defined by the mapper 16 during its operations.
ii. An association rule between receivers 14 and MU-MIMO groups for a time slot, $a_k(t)$, k=1,...,K, denoting the MU-MIMO group where receiver 14 "k" will belong for this slot. Moreover, each receiver 14 "k" may belong to only one MU-MIMO group, g, in order to preserve the effectiveness of the inter-group interference cancelation properties of the outer precoder.

iii. Representative channel correlations or a representative covariance matrix for each MU-MIMO group g, $C_g(t)$, which is a function of the covariance matrices of the receivers 14 mapped to MU-MIMO group g. In this regard, it should be noted that if the covariance matrices of all receivers 14 have full rank, the association of receivers 14 to MU-MIMO groups and the computation of the representative covariance matrices may not require any modification as compared to standard procedures. If the matrices are full rank but some eigenvalues are very small (e.g. smaller than 0.00001), these eigenvalues may be discarded and the matrices may be treated as reduced rank matrices. If all eigenvalues are significantly large, the representative covariance matrices of each MU-MIMO group will be full rank and, therefore, receivers 14 from only one MU-MIMO group maybe selected by the selector 18.

The transmitter 12 may have a total power budget of P (Watt) and the noise variance at each receiver 14 may be $\sigma^2$ (Watt). Moreover, $\lambda_k^{(m)}$ may denote the m-th biggest eigenvalue of matrix $R_k$. In addition, a fraction $\beta_{DL} \cdot S$ of the time slot may be used for the downlink pilot/training sequence and a fraction $\beta_{UL} \cdot S$ may be needed for one receiver 14 to feed back the CSI of the equivalent channel. Furthermore, $d(A,B)$ may be a distance among subspaces spanned by the eigenvectors of matrices $A$ and $B$. For example, the distance may be the Hausdorff distance between subspaces, which is defined as follows: For two square matrices of dimension M, let r(A), r(B) be the ranks of matrices A and B, respectively and $U_A$, $U_B$ be the corresponding matrices whose columns are the eigenvectors corresponding to nonzero eigenvalues; then,

$$d(A,B) = \sqrt{\max(r(A), r(B)) + U_A \cdot U_A^H \cdot U_B \cdot U_B^H}$$

The parameter $d_{thr}$ may be a control parameter which can be adapted, for example, based on field trials or simulations of the topology/scenario of interest and assessment of the performance of the cellular communication network 10 for different values of this parameter. In addition, A may be the set of receivers 14 not yet assigned to a group, G may be the number of groups, and $N_g$ may be the number of receivers 14 in group g.

In particular, after initialization, the algorithm determines which receiver 14 k* has the highest transmission priority. Once, the receiver 14 k* is determined, the mapper 16 determines a group g* which is closest to the receiver 14 k* based on the above-discussed distance metric d. If the distance d* is below the threshold $d_{thr}$, the receiver 14 k* is associated to the group. Otherwise, a new group is formed having the receiver 14 k* as its first member. In this regard, it should be noted that the process depicted in Fig. 4 is only one of the possible implementations and other implementations are possible.

In a further development, the mapper 16 is further configured to group the plurality of receivers 14 to a first number of MU-MIMO groups during a first time slot and to group the plurality of receivers 14 to a second number of MU-MIMO groups during a second time slot, wherein the first number is different from the second number and wherein the second slot follows directly after the first slot.

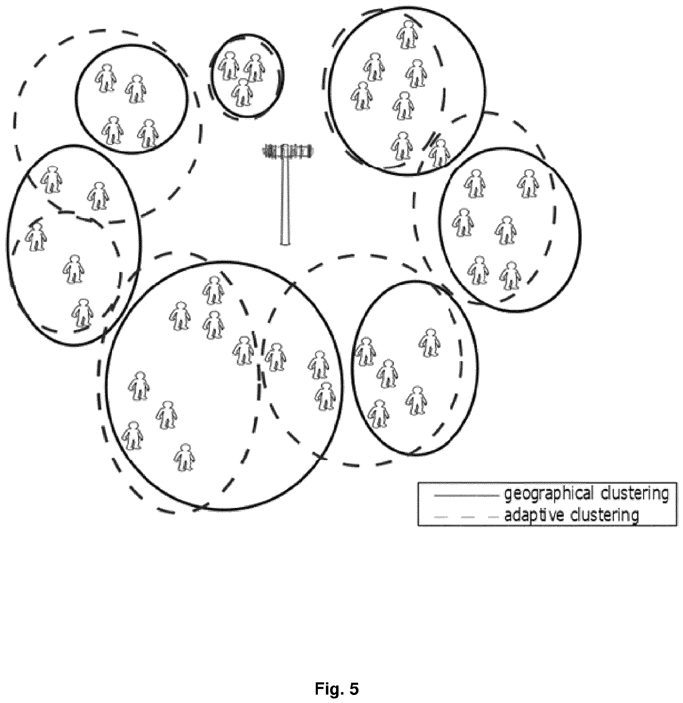

Fig. 5 illustrates the differences in the group allocation that would result by applying a prior art grouping approach, i.e., based solely on channel statistics (denoted as *geographical clustering* for simplicity), and the grouping approach applied by the mapper 12 shown in Fig. 4 which is based on both channel statistics and QoS demands (denoted as *adaptive clustering*).

As can be seen in Fig. 5, the grouping based only on the channel statistics may have a very precise geographical characterization and may stay constant for the whole time of the system's operation until the users carrying the receivers decide to move, thereby changing the positions of the receivers. In response to movement of a receiver, a new static grouping may be performed. In this regard, it is noted that if the coefficients $x_k(t)$ are the same for a given time slot, then the grouping obtained by means of the proposed invention coincides with the grouping obtained via geographical clustering. However, as time progresses and the coefficients of the receivers 14 become different, the grouping will change, for example, as shown by the dashed circles in Fig. 5. In general, the grouping may not change for receivers 14 belonging to very distinct groups, however, many of the groups will change and adapt to the system conditions. More specifically, the grouping obtained with the algorithm shown in Fig. 4 will always reflect the state of the mobile communication system 10 and the demands of the receivers 16.

## Selector

The selector 18 embeds a function that takes as inputs the coefficients associated to the receivers 14 as well as the outputs of the mapper 16, i.e. $C_g$ and $\alpha$. Based on these values, the selector 18 selects the set of receivers 14 from which to ask for CSI for this time slot, i.e., $U(t)$. This set may be selected by applying a heuristic to maximize an estimation of the weighted sum rate of the system, with weights being the coefficients $x_k(t)$, over the sets of receivers 14 to be asked to report their CSI. However, the process is not limited thereto and other metrics may be used, provided that they aggregate the information given by $C_g$, $\alpha$ and $x_k(t)$. The operations performed by the selector 18 are given in the flow diagram of Fig. 5, where $d(A, B)$ is a distance among subspaces spanned by the eigenvectors of matrices $A$ and $B$. Moreover, $d_{groups}$ is a control parameter which may be tuned. In addition, A is the set of receivers 14 for which it is not yet decided if they will feed back or not, $K_g$ is the number of receivers 14 from group g to feed back and J are estimations of the metric to be maximized by the selector 18. It is to be noted that this description is only one of the possible implementations of this block, and other implementations are possible in other embodiments.

At every round of the algorithm shown in Fig. 5, the selector 18 examines the receiver 14 which, among the receivers 14 which have not yet been examined, has the biggest product of weight multiplied with an estimation of the rate this receiver 14 will get. If the receiver 14 belongs to a group already selected or to a group whose subspace has a distance from the subspaces of all other groups which have been selected so far, which is more than $d_{groups}$ and the estimated weighted sum rate by adding this receiver 14 to the set of all other kept receivers 14 increases, then this receiver 14 is also kept. If this is the first receiver 14 of its group that is kept, then its group is added to the list of selected groups. If the receiver belongs to a group whose subspace has a distance to some of the subspaces of the groups already selected that is less than $d_{groups}$ or if the estimated weighted sum rate does not improve by adding this receiver 14, then this receiver 14 is discarded and the algorithm continues. The algorithm stops when all receivers 14 in the cellular communication network 10 have been examined.

**CSI acquisition**

The MU-MIMO transmitter 12 further includes an acquisition entity, as depicted in Fig. 3, configured to compute an outer precoder for each identified MU-MIMO group and to encode and transmit a set of pilot or training sequences using the outer precoder to the selected receivers 14 in each identified MU-MIMO group. The acquisition entity is further configured to receive CSI from the selected receivers 14 for each of the identified MU-MIMO groups.

The CSI acquisition entity of Fig. 3 accepts as input the statistics of the channels, the information about the selected receivers 14 and the selected groups and provides as output the instantaneous CSI obtained from the aforementioned selected receivers 14. In practice, this may be done by performing the following steps:

i. An outer precoder $V_{g(k)}(t)$ is computed for each member of the set of selected MU-MIMO groups by using the information provided by the representative covariance matrix of the selected groups $C_g$. In one embodiment of this invention $V_{g(k)}(t)$ may be constructed such that the inter-group interference is completely nulled. For instance, this could be achieved by constructing $V_{g(k)}(t)$ as of a block-diagonalization precoder, for which only the information embedded in $C_g$ is necessary.

ii. A set of arbitrary pilot sequences (which are known by the receivers 14) may be encoded with $V_{g(k)}(t)$ and transmitted to the selected receivers 14.

iii. The instantaneous CSI may then be fed back by the receivers 14 to the transmitter 12, for example, by means of legacy multi-user uplink communication strategies, and may be acquired by the CSI acquisition entity.

**Precoder**

The transmitter further comprises a precoder entity, as depicted in Fig. 3, which is configured to compute an inner precoder using the CSI and the outer precoder of each identified MU-MIMO group.

The precoder entity of Fig. 3 accepts as input the outer precoders $V_{g(k)}(t)$ and the CSI obtained by the CSI acquisition entity to compute the inner precoders $\vec{u}_k(t)$ responsible for managing the multi-user interference within each MU-MIMO group. In this context, every known strategy for MU-MIMO communications may be implemented. In particular, the precoder entity may operate according to the following steps:

i. A semi-orthogonal receiver selection may be performed per selected group to exclude the previously selected receivers 14 whose instantaneous CSI does not satisfy a semi-orthogonality constraint w.r.t. the other selected receivers 14 in the same MU-MIMO group.

ii. A weighted water-filling strategy may be adopted to identify the best power allocation to maximize the bit rate that can be provided to the served receivers 14. In this step, the expected bit rates achieved by the links towards each of the selected receivers 14 may be computed, i.e., $\mu_k(t)$.

The resulting two-step precoder is fed to a radio frequency stage of the transmitter 12 to proceed with the transmission.

**Estimator**

The estimator entity of Fig. 3 may accept as input the CSI obtained by the selected receivers 14, and acquired by the CSI acquisition entity. The estimator entity may update the corresponding covariance matrices $R_k$. This process allows refining the quality of the channel statistics upon which the mapper 12 operates in the following slots. In this regard, it is to be noted that any legacy solution for updating covariance matrices can be implemented by this entity.

**Aggregator**

The aggregator entity of Fig. 3 can be seen as the complementary element of the estimator entity. In practice, it may operate at time slot $t$ by using the quantities $\mu_k(t-1)$ computed by the precoder entity at time slot $t-1$ to update $x_k(t)$, i.e., the coefficients used by the mapper 16 and the selector 18. This update may be performed according to several updating rules, depending on the scope of the transmission. For example, the scope could be the proportional fairness among receivers 14. In this context, the new coefficient associated to receiver 14 "k" at time slot $t$ may be computed by the aggregator entity as

$$x_k(t) = \frac{1}{\overline{r}_k(t)}$$

where $\overline{r}_k(t)$ is the exponential averaging of the service (transmitted bit per time slot) that receiver "k" has been given up to slot $t-1$, that is:

$$\overline{r}_k(t) = (1-\beta) \cdot \overline{r}_k(t-1) + \beta \cdot \mu_k(t-1)$$

with $0 < \beta < 1$ as suitable averaging parameter.

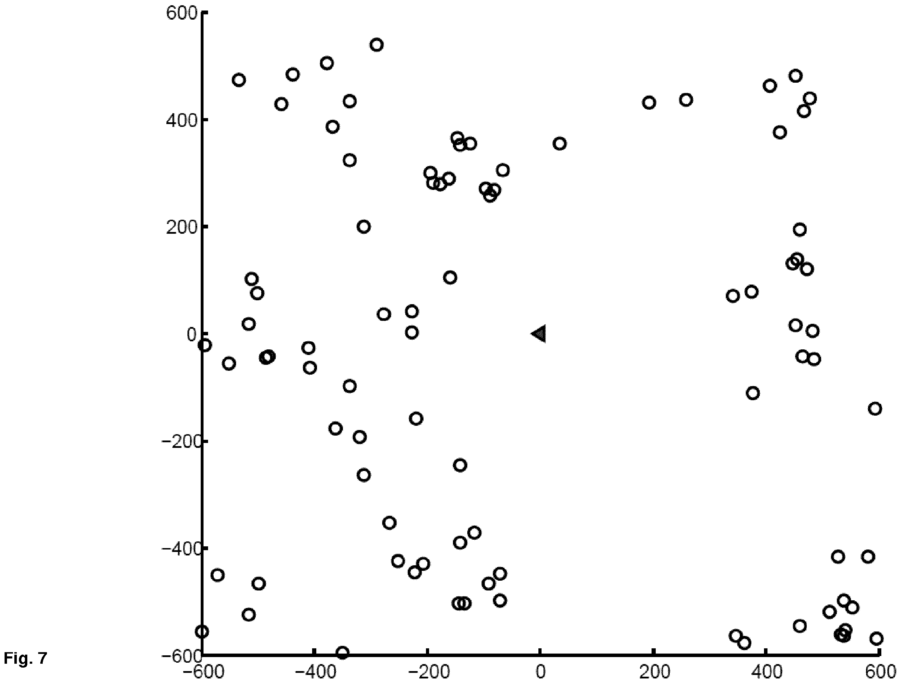

The performance achievable by means of the proposed invention is showcased by testing it against the baseline approach of Adhikary, A.; Junyoung Nam; Jae-Young Ahn; Caire, G., described in an article entitled "Joint Spatial Division and Multiplexing-The Large-Scale Array Regime," which has been published in the IEEE Transactions on Information Theory, vol.59, no.10, pp.6441,6463, in Oct. 2013, and Junyoung Nam; Adhikary, A.; Jae-Young Ahn; Caire, G., described in an article entitled "Joint Spatial Division and Multiplexing: Opportunistic Beamforming, User Grouping and Simplified Downlink Scheduling," which has been published in the IEEE Journal of Selected Topics in Signal Processing, vol.8, no.5, pp.876,890, in Oct. 2014, in a system where the transmitter 12 uses a uniform linear array of 100 antenna elements. A topology of 87 receivers 14 around the transmitter 12 is created at random as shown in Fig. 7, in which the triangle indicates the transmitter 12 while the circles represent the receivers 14 (with the distances measured in meters).

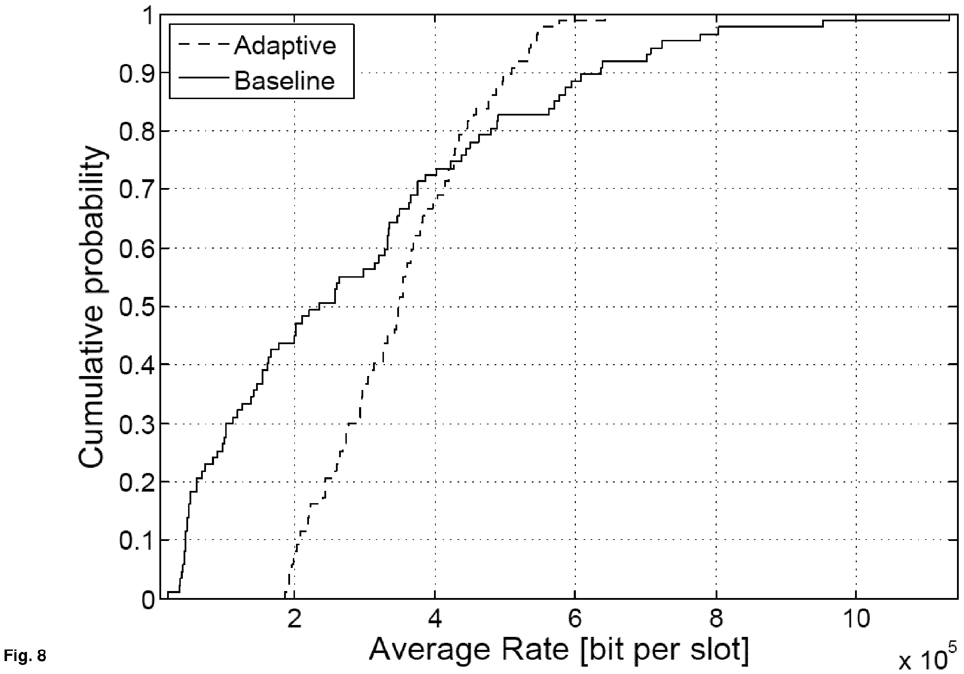

Based on the topology shown in Fig. 7, cumulative distributions of the average service rates of the receivers 14 have been calculated and are depicted in Fig. 8. As shown in Fig. 8, the performance of the cellular communication system 10 implementing the proposed concepts is fairer, with the worst 75% of the receivers 14 getting better rates than what they would have if the cellular communication system 10 operated according to the prior art grouping approach that uses only information about the channel statistics. This also illustrates an improvement in terms of rate outage for the receivers 14. In particular, the minimum average rate achieved by a receiver 14, when the proposed concepts are adopted, is around 200% larger than what is achieved by the prior art approach. Another benefit as compared to the prior art is given by a faster convergence of the average rate perceived by each receiver 14, due to the flexibility and adaptiveness of the grouping.

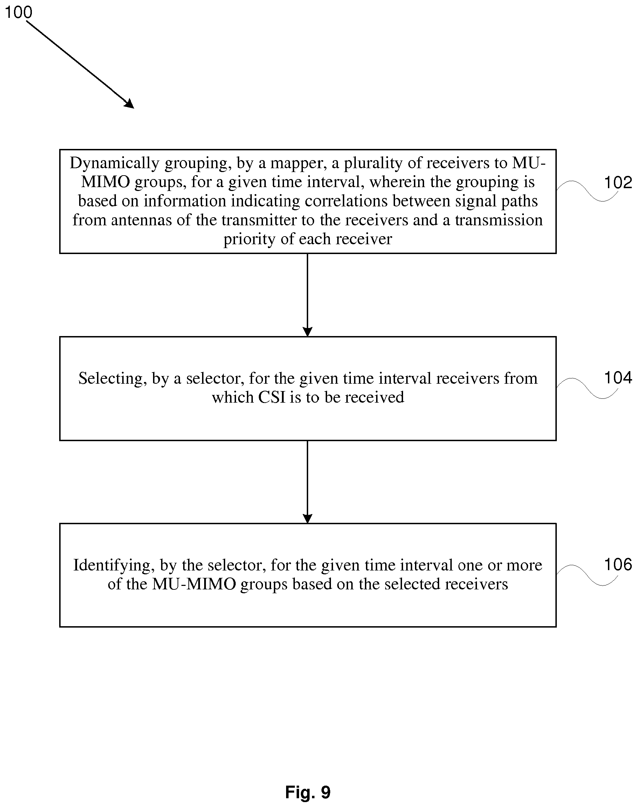

Fig. 9 is a schematic flow diagram of a process 100 performed by the transmitter 12. At 102, the process starts with dynamically grouping, by the mapper 16, a plurality of receivers 14 to MU-MIMO groups, for a given time interval, wherein the grouping is based on information indicating correlations between signal paths from antennas of the transmitter 12 to the receivers 14 and a transmission priority of each receiver 14. At 102, the process continues with selecting, by the selector 18, for the given time interval receivers 14 from which CSI is to be received. At 104, the process ends with identifying, by the selector 18, for the given time interval one or more of the MU-MIMO groups based on the selected receivers 14.

Finally, it is noted that the process can also be implemented in software which executes the process when instructions stored on a computer-readable medium are executed by a processor of a computing device.

**Claims**

1. A multi-user multiple-input multiple-output, MU-MIMO, transmitter (12) for operating a radio antenna array (20) to establish signal paths between antennas of the radio antenna array (20) and a plurality of receivers (14), the MU-MIMO transmitter (12) comprising:

   a mapper (16) configured to dynamically group, for a time interval, the plurality of receivers (14) to MU-MIMO groups, based on information indicating correlations between signal paths from antennas of the radio antenna array (20) to receivers of the plurality of receivers (14) and a transmission priority of each receiver of the plurality of receivers (14); and
   a selector (18) configured to select, for the time interval, a set of receivers of the plurality of receivers (14) from which channel state information, CSI, is to be received, and to identify one or more of the MU-MIMO groups based on the selected set of receivers (14),
   wherein the selector (18) is configured to:

   examine a receiver that, among receivers that have not been selected, has a biggest product of the transmission priority multiplied with an estimated rate that the examined receiver is estimated to get;
   when the examined receiver belongs to a MU-MIMO group that is already identified or has a subspace having a distance from subspaces of all other already identified MU-MIMO groups that is more than a specified distance, and an estimated weighted sum rate increases by adding the examined receiver to the set of receivers selected for the time interval, add the examined receiver to the set of receivers selected for the time interval, otherwise discard the examined receiver; and
   iteratively perform the steps of examining and adding or discarding until all receivers have been examined, wherein the MU-MIMO transmitter (12) is further configured to re-calculate the transmission priority of each receiver of the plurality of receivers (14) dynamically when in operation, and
   wherein the mapper (16) is further configured to form new MU-MIMO groups of receivers from the plurality of receivers (14) based on the re-calculated transmission priority of each receiver of the plurality of receivers (14).

2. The MU-MIMO transmitter (12) of claim 1, further including:
   an acquisition entity configured to compute a first precoder for each identified MU-MIMO group and to encode and transmit a set of pilot or training sequences using the first precoder to the selected set of receivers (14) in each identified MU-MIMO group, wherein the first precoder is computed to nullify inter-group interference.

3. The MU-MIMO transmitter (12) of claim 2, wherein the acquisition entity is further configured to receive CSI from the selected set of receivers (14) for each of the identified MU-MIMO groups, wherein the MU-MIMO transmitter (12) further comprises a precoder entity configured to compute a second precoder using the received CSI and the first precoder of each identified MU-MIMO group, and wherein the second precoder is computed to manage multi-user interference within each MU-MIMO group.

4. The MU-MIMO transmitter (12) of claim 3, wherein the MU-MIMO transmitter (12) is further configured to re-calculate the transmission priority of each receiver of the plurality of receivers (14) dynamically based on at least one of quality-of-service requirements, traffic conditions, and fairness considerations relating to the plurality of receivers (14).

5. The MU-MIMO transmitter (12) of claim 4, wherein the fairness considerations include a comparison of a traffic amount of each receiver of the plurality of receivers (14) during a common time interval.

6. The MU-MIMO transmitter (12) of any one of claims 1 to 5, wherein the mapper (16) is further configured to group the plurality of receivers (14) to a first number of MU-MIMO groups during a first time slot and to group the plurality of receivers (14) to a second number of MU-MIMO groups during a second time slot, wherein the first number is different from the second number, and wherein the second time slot follows directly after the first time slot.

7. A method of operating a multi-user multiple-input multiple-output, MU-MIMO, transmitter (12), the method comprising:

   dynamically grouping (102), by a mapper (16), a plurality of receivers (14) to MU-MIMO groups, for a time interval, based on information indicating correlations between signal paths from antennas of the MU-MIMO transmitter (12) to receivers of the plurality of receivers (14) and a transmission priority of each receiver of the plurality of receivers (14);

selecting (104), by a selector (18), for the time interval, a set of receivers of the plurality of receivers (14) from which channel state information, CSI, is to be received; and

identifying (106), by the selector (18), for the time interval, one or more of the MU-MIMO groups based on the selected set of receivers (14),

wherein the selecting (104), by the selector (18), for the time interval, a set of receivers of the plurality of receivers (14) from which channel state information, CSI, is to be received comprises the steps of:

examining a receiver that, among receivers that have not been selected, has a biggest product of the transmission priority multiplied with an estimated rate that the examined receiver is estimated to get;

when the examined receiver belongs to a MU-MIMO group that is already identified or has a subspace having a distance from subspaces of all other already identified MU-MIMO groups that is more than a specified distance, and an estimated weighted sum rate increases by adding the examined receiver to the set of receivers selected for the time interval, adding the examined receiver to the set of receivers selected for the time interval, otherwise discarding the examined receiver; and

iteratively performing the steps of examining and adding or discarding until all receivers have been examined, wherein the method further comprises:

dynamically re-calculating, by the MU-MIMO transmitter (12), the transmission priority of each receiver of the plurality of receivers (14); and

forming, by the mapper (16), new MU-MIMO groups of receivers from the plurality of receivers (14) based on the re-calculated transmission priority of each receiver of the plurality of receivers (14).

8.  The method of claim 7, further comprising:

computing, by an acquisition entity, a first precoder for each identified MU-MIMO group, wherein the first precoder is computed to nullify inter-group interference;

encoding, by the acquisition entity, a set of pilot or training sequences using the first precoder; and

transmitting, by the MU-MIMO transmitter (12), the encoded set of pilot or training sequences to the selected set of receivers (14) in each identified MU-MIMO group.

9.  The method of claim 8, further comprising:

receiving, by the acquisition entity, CSI from the selected set of receivers (14) for each of the identified MU-MIMO groups; and

computing, by a precoder entity, a second precoder using the received CSI and the first precoder, wherein the second precoder is computed to manage multi-user interference within each MU-MIMO group.

10.  The method of claim 7, wherein the transmission priority is dynamically re-calculated based on at least one of quality-of-service requirements, traffic conditions, and fairness considerations relating to the plurality of receivers (14).

11.  The method of claim 10, wherein the fairness considerations include a comparison of a traffic amount of each receiver of the plurality of receivers (14) during a common time interval.

12.  The method of any one of claims 7 to 11, further comprising dynamically changing a number of MU-MIMO groups based on the information indicating correlations between signal paths from antennas to receivers of the plurality of receivers (14) and the transmission priority of each receiver of the plurality of receivers (14).

13.  A computer readable medium comprising instructions that, when executed by a computing device, perform the method of any one of claims 7 to 12.

**Patentansprüche**

1.  Mehrbenutzer-Mehrfacheingangs-Mehrfachausgangs(MU-MIMO)-Sender (12) zum Betreiben eines Funkantennen-Array (20), um Signalpfade zwischen Antennen des Funkantennen-Arrays (20) und einer Vielzahl von Empfängern (14) einzurichten, wobei MU-MIMO-Sender (12) umfasst:

einen Mapper (16), der konfiguriert ist, um für ein Zeitintervall die Vielzahl von Empfängern (14) dynamisch zu MU-MIMO-Gruppen zusammenzufassen, basierend auf Informationen, die Korrelationen zwischen Signalpfaden von Antennen des Funkantennen-Arrays (20) zu den Empfängern der Vielzahl von Empfängern (14) und eine Übertragungspriorität jedes Empfängers der Vielzahl von Empfängern (14) angeben; und

einen Selektor (18), der konfiguriert ist, um für das Zeitintervall einen Satz von Empfängern der Vielzahl von Empfängern (14) auszuwählen, von denen Kanalzustandsinformationen (*channel state information* - CSI) empfangen werden sollen, und um eine oder mehrere der MU-MIMO-Gruppen basierend auf dem ausgewählten Satz von Empfängern (14) zu identifizieren, wobei der Selektor (18) für Folgendes konfiguriert ist:

Untersuchen eines Empfängers, der unter nicht ausgewählten Empfängern ein größtes Produkt aus Übertragungspriorität multipliziert mit einer geschätzten Rate aufweist, von der geschätzt wird, dass der untersuchte Empfänger diese erhalten wird;

wenn der untersuchte Empfänger zu einer MU-MIMO-Gruppe gehört, die bereits identifiziert ist, oder einen Unterraum aufweist, der einen Abstand zu Unterräumen aller anderen bisher identifizierten MU-MIMO-Gruppen aufweist, der größer als ein bestimmter Abstand ist, und sich eine geschätzte gewichtete Summenrate erhöht, indem der untersuchte Empfänger zu dem für das Zeitintervall ausgewählten Satz von Empfängern hinzugefügt wird, Hinzufügen des untersuchten Empfängers zu dem für das Zeitintervall ausgewählten Satz von Empfängern, andernfalls Verwerfen des untersuchten Empfängers; und

Iteratives Durchführen der Schritte des Untersuchens und Hinzufügens oder Verwerfens, bis alle Empfänger untersucht worden sind,

wobei der MU-MIMO-Sender (12) ferner konfiguriert ist, um die Übertragungspriorität jedes Empfängers der Vielzahl von Empfängern (14) dynamisch neu zu berechnen, wenn er in Betrieb ist, und

wobei der Mapper (16) ferner konfiguriert ist, um neue MU-MIMO-Gruppen von Empfängern aus der Vielzahl von Empfängern (14) basierend auf der neu berechneten Übertragungspriorität jedes Empfängers der Vielzahl von Empfängern (14) zu bilden.

2. MU-MIMO-Sender (12) nach Anspruch 1, ferner einschließlich:
einer Erfassungseinheit, die konfiguriert ist, um einen ersten Vorcodierer für jede identifizierte MU-MIMO-Gruppe zu berechnen und einen Satz von Pilot- oder Trainingssequenzen unter Verwendung des ersten Vorcodierers zu codieren und zu dem ausgewählten Satz von Empfängern (14) in jeder identifizierten MU-MIMO-Gruppe zu übertragen, wobei der erste Vorcodierer berechnet wird, um Interferenzen zwischen den Gruppen aufzuheben.

3. MU-MIMO-Sender (12) nach Anspruch 2, wobei die Erfassungseinheit ferner konfiguriert ist, um CSI von dem ausgewählten Satz von Empfängern (14) für jede der identifizierten MU-MIMO-Gruppen zu empfangen, wobei der MU-MIMO-Sender (12) ferner eine Vorcodierer-Einheit umfasst, die konfiguriert ist, um einen zweiten Vorcodierer unter Verwendung der empfangenen CSI und des ersten Vorcodierers jeder identifizierten MU-MIMO-Gruppe zu berechnen, und wobei der zweite Vorcodierer berechnet wird, um Mehrbenutzer-Interferenzen innerhalb jeder MU-MIMO-Gruppe zu verwalten.

4. MU-MIMO-Sender (12) nach Anspruch 3, wobei der MU-MIMO-Sender (12) ferner konfiguriert ist, um die Übertragungspriorität jedes Empfängers der Vielzahl von Empfängern (14) dynamisch neu zu berechnen, basierend auf Dienstgüteanforderungen, Verkehrsbedingungen und/oder Fairnessüberlegungen in Bezug auf die Vielzahl von Empfängern (14).

5. MU-MIMO-Sender (12) nach Anspruch 4, wobei die Fairnessüberlegungen einen Vergleich einer Verkehrsmenge jedes Empfängers der Vielzahl von Empfängern (14) während eines gemeinsamen Zeitintervalls einschließen.

6. MU-MIMO-Sender (12) nach einem der Ansprüche 1 bis 5, wobei der Mapper (16) ferner konfiguriert ist, um die Vielzahl von Empfängern (14) während eines ersten Zeitfensters zu einer ersten Anzahl von MU-MIMO-Gruppen zusammenzufassen und um die Vielzahl von Empfängern (14) während eines zweiten Zeitfensters zu einer zweiten Anzahl von MU-MIMO-Gruppen zusammenzufassen, wobei sich die erste Anzahl von der zweiten Anzahl unterscheidet und wobei das zweite Zeitfenster direkt auf das erste Zeitfenster folgt.

7. Verfahren zum Betreiben eines Mehrbenutzer-Mehrfacheingangs-Mehrfachausgabe(MU-MIMO)-Senders (12), wobei das Verfahren umfasst:

dynamisches Zusammenfassen (102), durch einen Mapper (16), von einer Vielzahl von Empfängern (14) zu MU-MIMO-Gruppen, für ein Zeitintervall, basierend auf Informationen, die die Korrelationen zwischen Signalpfaden von Antennen des MU-MIMO-Senders (12) zu den Empfängern der Vielzahl von Empfängern (14) und eine Übertragungspriorität jedes Empfängers der Vielzahl von Empfängern (14) angeben;

Auswählen (104), durch einen Selektor (18), für den Zeitintervall, eines Satzes von Empfängern der Vielzahl von Empfängern (14), von welchen Kanalstatusinformationen (CSI) empfangen werden sollen; und

Identifizieren (106), durch den Selektor (18), einer oder mehrerer der MU-MIMO-Gruppen basierend auf dem ausgewählten Satz von Empfängern (14) für das Zeitintervall,

wobei das Auswählen (104), durch den Selektor (18), für den Zeitintervall, eines Satzes von Empfängern der Vielzahl von Empfängern (14), von welchen Kanalstatusinformationen (CSI) empfangen werden sollen, die folgenden Schritte umfasst:

Untersuchen eines Empfängers, der unter nicht ausgewählten Empfängern ein größtes Produkt aus Übertragungspriorität multipliziert mit einer geschätzten Rate aufweist, von der geschätzt wird, dass der untersuchte Empfänger diese erhalten wird;

wenn der untersuchte Empfänger zu einer bereits identifizierten MU-MIMO-Gruppe gehört oder einen Unterraum aufweist, der einen Abstand zu Unterräumen aller anderen bereits identifizierten Gruppen aufweist, der größer als ein bestimmter Abstand ist, und sich eine geschätzte gewichtete Summenrate erhöht, indem der untersuchte Empfänger zu dem für das Zeitintervall ausgewählten Satz von Empfängern hinzugefügt wird, Hinzufügen des untersuchten Empfängers zu dem für das Zeitintervall ausgewählten Satz von Empfängern, andernfalls Verwerfen des untersuchten Empfängers; und

Iteratives Durchführen der Schritte des Untersuchens und Hinzufügens oder Verwerfens, bis alle Empfänger untersucht worden sind,

wobei das Verfahren ferner umfasst:

dynamisches Neuberechnen, durch den MU-MIMO-Sender (12), der Übertragungspriorität jedes Empfängers der Vielzahl von Empfängern (14); und

Bilden, durch den Mapper (16), von neuen MU-MIMO-Gruppen von Empfängern aus der Vielzahl von Empfängern (14) basierend auf der neu berechneten Übertragungspriorität von jedem Empfänger der Vielzahl von Empfängern (14).

8. Verfahren nach Anspruch 7, ferner umfassend:

Berechnen, durch eine Erfassungseinheit, eines ersten Vorcodierers für jede identifizierte MU-MIMO-Gruppe, wobei der erste Vorcodierer berechnet wird, um Interferenzen zwischen Gruppen aufzuheben;

Codieren, durch die Erfassungseinheit, eines Satzes von Pilot- oder Trainingssequenzen unter Verwendung des ersten Vorcodierers; und

Übertragen, durch den MU-MIMO-Sender (12), des codierten Satzes von Pilot- oder Trainingssequenzen zu dem ausgewählten Satz von Empfängern (14) in jeder identifizierten MU-MIMO-Gruppe.

9. Verfahren nach Anspruch 8, ferner umfassend:

Empfangen, durch die Erfassungseinheit, der CSI von dem ausgewählten Satz von Empfängern (14) für jede der identifizierten MU-MIMO-Gruppen; und

Berechnen, durch eine Vorcodierer-Einheit, eines zweiten Vorcodierers unter Verwendung der empfangenen CSI und des ersten Vorcodierers, wobei der zweite Vorcodierer berechnet wird, um Mehrbenutzer-Interferenzen innerhalb jeder MU-MIMO-Gruppe zu verwalten.

10. Verfahren nach Anspruch 7, wobei die Übertragungspriorität dynamisch neu berechnet wird, basierend auf Dienstgüteanforderungen, Verkehrsbedingungen und/oder Fairnessüberlegungen in Bezug auf die Vielzahl von Empfängern (14).

11. Verfahren nach Anspruch 10, wobei die Fairnessüberlegungen einen Vergleich einer Verkehrsmenge jedes Empfängers der Vielzahl von Empfängern (14) während eines gemeinsamen Zeitintervalls einschließen.

12. Verfahren nach einem der Ansprüche 7 bis 11, ferner umfassend:
dynamisches Ändern einer Anzahl von MU-MIMO-Gruppen auf der Grundlage der Informationen, die Korrelationen zwischen den Signalpfaden von Antennen zu den Empfängern der Vielzahl von Empfängern (14) und der Übertragungspriorität jedes Empfängers der Vielzahl von Empfängern (14) angeben.

**13.** Computerlesbares Medium, umfassend Befehle, die bei ihrer Ausführung durch ein Computergerät, das Verfahren nach einem der Ansprüche 7 bis 12 durchführen.

**Revendications**

1. Émetteur (12) multi-utilisateurs à entrées multiples et sorties multiples, MU-MIMO, destiné à faire fonctionner un réseau d'antennes radio (20) afin d'établir des trajets de signaux entre des antennes du réseau d'antennes radio (20) et une pluralité de récepteurs (14), l'émetteur MU-MIMO (12) comprenant :

   un mappeur (16) configuré pour regrouper dynamiquement, pour un intervalle de temps, la pluralité de récepteurs (14) en groupes MU-MIMO, en fonction d'informations indiquant des corrélations entre des trajets de signaux allant d'antennes du réseau d'antennes radio (20) aux récepteurs de la pluralité de récepteurs (14), et sur une priorité de transmission de chaque récepteur de la pluralité de récepteurs (14) ; et

   un sélecteur (18) configuré pour sélectionner, pour l'intervalle de temps, un ensemble de récepteurs de la pluralité de récepteurs (14) à partir desquels des informations d'état de canal, CSI, doivent être reçues, et pour identifier un ou plusieurs des groupes MU-MIMO en fonction de l'ensemble de récepteurs sélectionnés (14),

   le sélecteur (18) étant configuré pour : examiner un récepteur qui, parmi des récepteurs qui n'ont pas été sélectionnés, présente un plus grand produit de la priorité de transmission multiplié par un débit estimé que le récepteur individuel est estimé à recevoir ; et

   lorsque le récepteur examiné appartient à un groupe MU-MIMO qui est déjà identifié ou présente un sous-espace présentant une distance de sous-espaces de tous les autres groupes MU-MIMO déjà identifiés qui est supérieure à une distance spécifiée et qu'un débit total pondéré estimé augmente du fait de l'ajout du récepteur examiné à l'ensemble de récepteurs sélectionnés pour l'intervalle de temps, ajouter le récepteur examiné à l'ensemble de récepteurs sélectionnés pour l'intervalle de temps, sinon supprimer le récepteur examiné ; et effectuer de manière itérative les étapes d'examen et d'ajout ou de suppression, jusqu'à ce que tous les récepteurs aient été examinés ;

   l'émetteur MU-MIMO (12) étant en outre configuré pour recalculer la priorité de transmission de chaque récepteur de la pluralité de récepteurs (14) dynamiquement lorsqu'ils sont en fonctionnement, et

   le mappeur (16) étant en outre configuré pour former de nouveaux groupes MU-MIMO de récepteurs à partir de la pluralité de récepteurs (14) en fonction de la priorité de transmission recalculée de chaque récepteur de la pluralité de récepteurs (14).

2. Émetteur MU-MIMO (12) selon la revendication 1, comportant en outre :
   une entité d'acquisition configurée pour calculer un premier précodeur pour chaque groupe MU-MIMO identifié et pour coder et transmettre un ensemble de séquences pilotes ou de formation à l'aide du premier précodeur à l'ensemble de récepteurs sélectionnés (14) dans chaque groupe MU-MIMO identifié, le premier précodeur étant calculé de manière à annuler des interférences inter-groupes.

3. Émetteur MU-MIMO (12) selon la revendication 2, dans lequel l'entité d'acquisition est en outre configurée pour recevoir les CSI de l'ensemble de récepteurs sélectionnés (14) pour chacun des groupes MU-MIMO identifiés, dans lequel l'émetteur MU-MIMO (12) comprend en outre une entité de précodeur configurée pour calculer un second précodeur à l'aide des CSI reçues et du premier précodeur de chaque groupe MU-MIMO identifié, et dans lequel le second précodeur est calculé de manière à gérer des interférences multi-utilisateurs dans chaque groupe MU-MIMO.

4. Émetteur MU-MIMO (12) selon la revendication 3, dans lequel l'émetteur MU-MIMO (12) est en outre configuré pour recalculer la priorité de transmission de chaque récepteur de la pluralité de récepteurs (14) dynamiquement en fonction des exigences de qualité de service, et/ou des conditions de trafic et/ou des considérations d'équité concernant la pluralité de récepteurs (14).

5. Émetteur MU-MIMO (12) selon la revendication 4, dans lequel les considérations d'équité comportent une comparaison d'une quantité de trafic de chaque récepteur de la pluralité de récepteurs (14) pendant un intervalle de temps commun.

6. Émetteur MU-MIMO (12) selon l'une quelconque des revendications 1 à 5, dans lequel le mappeur (16) est en outre configuré pour regrouper la pluralité de récepteurs (14) en un premier nombre de groupes MU-MIMO pendant un premier intervalle de temps, et pour regrouper la pluralité de récepteurs (14) en un second nombre de groupes MU-MIMO pendant un second intervalle de temps, le premier nombre étant différent du second nombre et le second intervalle de temps venant directement après le premier intervalle de temps.

7. Procédé pour faire fonctionner un émetteur (12) multi-utilisateurs à entrées multiples et sorties multiples, MU-MIMO, le procédé comprenant :

le regroupement dynamique (102), par un mappeur (16), d'une pluralité de récepteurs (14) en des groupes MU-MIMO, pour un intervalle de temps, en fonction d'informations indiquant des corrélations entre des trajets de signaux allant d'antennes de l'émetteur MU-MIMO (12) à des récepteurs de la pluralité de récepteurs (14), et sur une priorité de transmission de chaque récepteur de la pluralité de récepteurs (14) ;
la sélection (104), par un sélecteur (18), pour l'intervalle de temps, d'un ensemble de récepteurs de la pluralité de récepteurs (14) à partir desquels des informations d'état de canal, CSI, doivent être reçues ; et
l'identification (106), par le sélecteur (18), pour l'intervalle de temps d'un ou de plusieurs des groupes MU-MIMO en fonction de l'ensemble de récepteurs sélectionnés (14) ;
la sélection (104), par le sélecteur (18), pour l'intervalle de temps, de l'ensemble de récepteurs de la pluralité de récepteurs (14) à partir desquels des informations d'état de canal, CSI, doivent être reçues comprenant les étapes consistant à :

examiner un récepteur qui, parmi des récepteurs qui n'ont pas été sélectionnés, présente un plus grand produit de la priorité de transmission multiplié par un débit estimé que le récepteur examiné est estimé à recevoir ;
lorsque le récepteur examiné appartient à un groupe MU-MIMO qui est déjà identifié ou présente un sous-espace présentant une distance de sous-espaces de tous les autres groupes MU-MIMO déjà identifiés qui est supérieure à une distance spécifiée et qu'un débit total pondéré estimé augmente du fait de l'ajout du récepteur examiné à l'ensemble des récepteurs sélectionnés pour l'intervalle de temps, ajouter le récepteur examiné à l'ensemble de récepteurs sélectionnés pour l'intervalle de temps, sinon supprimer le récepteur examiné ; et
effectuer de manière itérative les étapes d'examen et d'ajout ou de suppression, jusqu'à ce que tous les récepteurs aient été examinés, le procédé comprenant en outre :

le recalcul dynamique, par l'émetteur MU-MIMO (12), de la priorité de transmission de chaque récepteur de la pluralité de récepteurs (14) ; et
la formation, par le mappeur (16), de nouveaux groupes MU-MIMO de récepteurs de la pluralité de récepteurs (14) en fonction de la priorité de transmission recalculée de chaque récepteur de la pluralité de récepteurs (14).

8. Procédé selon la revendication 7, comprenant en outre :

le calcul, par une entité d'acquisition, d'un premier précodeur pour chaque groupe MU-MIMO identifié, le premier précodeur étant calculé de manière à annuler des interférences inter-groupes ;
le codage, par l'entité d'acquisition, d'un ensemble de séquences pilotes ou de formation, à l'aide du premier précodeur ; et
la transmission, par l'émetteur MU-MIMO (12), de l'ensemble de séquences pilotes ou de formation codées à l'ensemble de récepteurs sélectionnés (14) de chaque groupe MU-MIMO identifié.

9. Procédé selon la revendication 8, comprenant en outre :

la réception, par l'entité d'acquisition, de CSI de l'ensemble de récepteurs sélectionnés (14) pour chacun des groupes MU-MIMO identifiés ; et
le calcul, par une entité de précodeur, d'un second précodeur à l'aide des CSI reçues et du premier précodeur, le second précodeur étant calculé de manière à gérer des interférences multi-utilisateurs dans chaque groupe MU-MIMO.

10. Procédé selon la revendication 7, dans lequel la priorité de transmission est recalculée dynamiquement en fonction des exigences de qualité de service, QoS, et/ou des conditions de trafic et/ou des considérations d'équité concernant la pluralité de récepteurs (14).

11. Procédé selon la revendication 10, dans lequel les considérations d'équité comportent une comparaison d'une quantité de trafic de chaque récepteur de la pluralité de récepteurs (14) pendant un intervalle de temps commun.

12. Procédé selon l'une quelconque des revendications 7 à 11, comprenant en outre le changement dynamique d'un certain nombre de groupes MU-MIMO en fonction des informations indiquant des corrélations entre des trajets de signal allant d'antennes à des récepteurs de la pluralité de récepteurs (14), et de la priorité de transmission de chaque récepteur de la pluralité de récepteurs (14).

13. Support lisible par ordinateur, comprenant des instructions qui lorsqu'elles sont exécutées par un dispositif informatique effectuent le procédé de l'une quelconque des revendications 7 à 12.

**Fig. 1**

| DL pilot | | Data transmission to the users | DL frequency band |
|---|---|---|---|
| | CSI feedback | | UL frequency band |

**Fig. 2**

Fig. 3

START

$$A \leftarrow \{1,...,K\}$$
$$G \leftarrow 1 \; ;$$

$$k^* \leftarrow \arg\max_{k \in A} \left[ x_k(t) \cdot \log_2 \left( 1 + \frac{P}{\sigma^2} \cdot \sum_{m=1}^{S} \lambda_k^{(m)} \right) \right]$$
$$A \leftarrow A - \{k^*\}$$
$$\mathbf{C}_1 \leftarrow \mathbf{R}_{k^*} \; ; a(k^*) \leftarrow 1; N_1 \leftarrow 1$$

STOP

Y

Is A empty?

N

$$k^* \leftarrow \arg\max_{k \in A} \left[ x_k(t) \cdot \log_2 \left( 1 + \frac{P}{\sigma^2} \cdot \sum_{m=1}^{S} \lambda_k^{(m)} \right) \right]$$
$$g^* \leftarrow \arg\min_{g \in \{1,..,G\}} \left[ d\left(\mathbf{R}_{k^*}, \mathbf{C}_g\right) \right], d^* \leftarrow d\left(\mathbf{R}_{k^*}, \mathbf{C}_{g^*}\right)$$

$$G \leftarrow G + 1;$$
$$\mathbf{C}_G \leftarrow \mathbf{R}_{k^*};$$
$$a(k^*) \leftarrow G;$$
$$N_G \leftarrow 1;$$

N

$$d^* < d_{thr}$$

Y

$$a(k^*) \leftarrow g^*;$$
$$N_{g^*} \leftarrow N_{g^*} + 1$$
$$\mathbf{C}_{g^*} \leftarrow \frac{N_{g^*} - 1}{N_{g^*}} \cdot \mathbf{C}_{g^*} + \frac{1}{N_{g^*}} \cdot \mathbf{R}_{k^*}$$

$$A \leftarrow A - \{k^*\}$$

**Fig. 4**

**Fig. 5**

**Fig. 6**

Fig. 7

Fig. 8

100

| Dynamically grouping, by a mapper, a plurality of receivers to MU-MIMO groups, for a given time interval, wherein the grouping is based on information indicating correlations between signal paths from antennas of the transmitter to the receivers and a transmission priority of each receiver | 102 |

| Selecting, by a selector, for the given time interval receivers from which CSI is to be received | 104 |

| Identifying, by the selector, for the given time interval one or more of the MU-MIMO groups based on the selected receivers | 106 |

**Fig. 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140092819 A1

**Non-patent literature cited in the description**

- **ADHIKARY.** *IEEE transaction on information theory,* vol. 59 (10
- **GESBERT, D. ; KOUNTOURIS, M. ; HEATH, R.W. ; CHAN-BYOUNG CHAE ; SALZER, T.** Shifting the MIMO Paradigm. *IEEE Signal Processing Magazine,* September 2007, vol. 24 (5), 36, , 46
- **ADHIKARY, A. ; JUNYOUNG NAM ; JAE-YOUNG AHN ; CAIRE, G.** Joint Spatial Division and Multiplexing-The Large-Scale Array Regime. *IEEE Transactions on Information Theory,* October 2013, vol. 59 (10), 6441, , 6463
- **JUNYOUNG NAM ; ADHIKARY, A. ; JAE-YOUNG AHN ; CAIRE, G.** Joint Spatial Division and Multiplexing: Opportunistic Beamforming, User Grouping and Simplified Downlink Scheduling. *IEEE Journal of Selected Topics in Signal Processing,* October 2014, vol. 8 (5), 876, , 890